# FASCICULE DE BREVET EUROPEEN

(11) **EP 2 252 512 B1**
(45) Date de publication et mention de la délivrance du brevet: **31.10.2012**
(21) Numéro de dépôt: 09727412.0
(22) Date de dépôt: 16.03.2009
(51) Int. Cl.: B64D 33/04, F02K 1/82

(54) **DISPOSITIF POUR RÉDUIRE LES ÉMISSIONS INFRAROUGE D'UN TURBOPROPULSEUR**
VORRICHTUNG ZUR REDUZIERUNG VON TURBOMOTOR-INFRAROTEMISSIONEN
DEVICE FOR REDUCING TURBOPROP INFRARED EMISSIONS

(30) Priorité: 20.03.2008 FR 0801538
(43) Date de publication de la demande: 24.11.2010
(73) Titulaire: AIRBUS OPERATIONS (SAS), 31060 Toulouse (FR)
(72) Inventeur: DURAND, Yves, 31840 Aussonne (FR)
(74) Mandataire: Gevers France
(86) Numéro de dépôt international: PCT/FR2009/000273
(87) Numéro de publication internationale: WO 2009/122037

(56) Documents cités:
- EP-A- 0 972 930
- US-A- 4 018 046
- US-A- 4 502 638
- US-A- 4 621 769
- US-A- 5 699 662

## Description

La présente invention concerne un dispositif pour réduire la signature infrarouge d'une tuyère de turbopropulseur pour aéronef. Deux dispositifs de l'art antérieur sont montrés dans les documents US 5699662 et US 4018046.

On sait que, dans certains turbopropulseurs, la sortie du flux des gaz chauds engendrés par la tuyère comporte, intérieurement audit turbopropulseur, un conduit qui prolonge la tuyère vers le bas et qui est traversé par ledit flux de gaz chauds. Un tel conduit est généralement incliné de 15 à 20 degrés par rapport à l'horizontale et il permet la récupération d'une partie de la poussée résiduelle du turbopropulseur.

La présente invention est particulièrement appropriée à un tel turbopropulseur.

Selon l'invention, un dispositif pour réduire les émissions infrarouge à la sortie d'un turbopropulseur monté sur un aéronef, ladite sortie comportant, intérieurement audit turbopropulseur, un conduit tubulaire qui prolonge la tuyère dudit turbopropulseur vers le bas et qui est traversé par le flux des gaz chauds sortant de ladite tuyère, est remarquable en ce qu'il comporte un manchon tubulaire qui est apte à glisser dans ledit conduit tubulaire en étant traversé par ledit flux de gaz chauds et qui peut passer :
- d'une position interne, pour laquelle ledit manchon tubulaire est intégralement logé à l'intérieur dudit conduit tubulaire,
- à une position saillante, pour laquelle ledit manchon tubulaire fait saillie à l'extérieur dudit conduit tubulaire et est apte à prélever, à la manière d'une écope, de l'air extérieur frais au voisinage dudit turbopropulseur et à mélanger l'air extérieur frais ainsi prélevé audit flux de gaz chauds provenant de la turbine, afin d'abaisser la température de ce dernier flux avant son rejet à l'extérieur par ledit manchon tubulaire.

Ainsi, grâce à la présente invention, le flux des gaz chauds sortant de la tuyère est dilué par de l'air extérieur frais, ce qui permet de réduire la signature infrarouge dudit turbopropulseur.

Pour le prélèvement de l'air extérieur frais, ledit manchon tubulaire comporte une ouverture latérale dirigée vers l'avant dudit aéronef et disposée, en position saillante dudit manchon tubulaire, au voisinage dudit turbopropulseur. Dans un mode de réalisation avantageux, ladite ouverture latérale résulte du fait que l'extrémité dudit manchon tubulaire dirigée vers la tuyère est tronquée en biais.

Pour guider le glissement dudit manchon à l'intérieur dudit conduit tubulaire, il est avantageux de prévoir des glissières coopérantes entre ces deux éléments.

De préférence, ledit manchon tubulaire est rapporté de façon amovible dans ledit conduit tubulaire. Il est alors avantageux que ladite position interne du manchon dans le conduit soit marquée par des premiers moyens de verrouillage à verrouillage automatique et à déverrouillage commandable, solidaires dudit conduit tubulaire. Ainsi, au sol lorsque ledit turbopropulseur est arrêté, on peut charger ledit manchon dans ledit conduit, à travers l'extrémité inférieure libre de celui-ci, puis le pousser dans ledit conduit jusqu'à ce que lesdits premiers moyens de verrouillage le verrouillent automatiquement en position interne. Au contraire, lorsque, en vol, il est nécessaire de faire passer ledit manchon de sa position interne à sa position saillante, on commande lesdits premiers moyens de verrouillage qui déverrouillent ledit manchon. Celui-ci peut donc, sous l'action conjuguée de la pesanteur et du flux des gaz chauds émis par la tuyère, glisser jusqu'à ladite position saillante.

Il est avantageux que ladite position saillante du manchon tubulaire soit marquée par des seconds moyens de verrouillage à verrouillage automatique, solidaires dudit conduit tubulaire. Ainsi, lorsque ledit manchon glisse de sa position interne à sa position saillante, lesdits seconds moyens de verrouillage le verrouillent dans cette dernière position. En outre, il est préférable que lesdits seconds moyens de verrouillage soient du type à déverrouillage commandable. En effet, on peut alors larguer en vol ledit manchon, afin de retrouver les pleines performances aérodynamiques de l'aéronef, lorsque l'usage dudit manchon n'est plus nécessaire.

De préférence, aussi bien lesdits premiers que lesdits seconds moyens de verrouillage sont du type à doigt de verrouillage commandé par un électroaimant, ledit doigt de verrouillage étant monté élastiquement par rapport audit électroaimant.

De préférence, lesdits premiers et seconds moyens de verrouillage agissent au niveau desdites glissières coopérantes du manchon et du conduit interne.

La présente invention concerne de plus un turbopropulseur dont le conduit interne comporte des glissières aptes à coopérer avec les glissières montées sur le manchon tubulaire et/ou des moyens de verrouillage pour marquer au moins une desdites positions dudit manchon à l'intérieur dudit conduit.
Les figures du dessin annexé feront bien comprendre comment l'invention peut être réalisée. Sur ces figures, des références identiques désignent des éléments semblables.
La figure 1 montre schématiquement, en perspective du dessous, un avion équipé de turbopropulseurs.
La figure 2 montre schématiquement, avec arrachement partiel, un des turbopropulseurs de l'avion de la figure 1.
La figure 3 illustre schématiquement la mise en place d'un manchon tubulaire selon l'invention dans l'un des turbopropulseurs.
Les figures 4 et 5 illustrent, en perspective partielle du dessous, respectivement les positions interne et saillante du manchon à l'intérieur d'un des turbopropulseurs.
La figure 6 montre, en coupe transversale partielle, le système de glissières coopérantes entre ledit manchon tubulaire et le conduit d'évacuation du flux chaud de la tuyère du turbopropulseur.
La figure 7 montre, en coupe partielle au niveau de la ligne VII-VII de la figure 6, les moyens de verrouillage en position dudit manchon à l'intérieur dudit conduit.

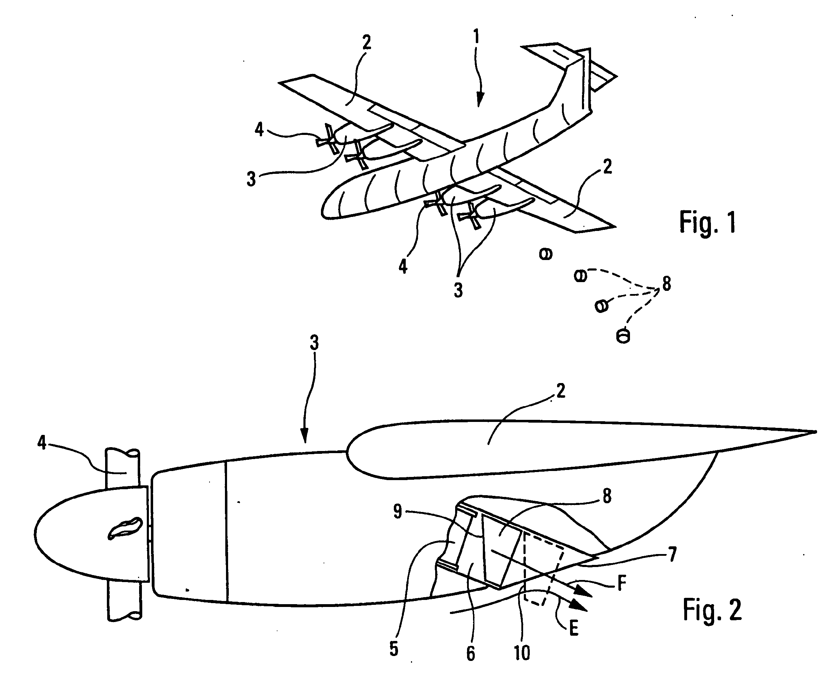

L'avion 1, représenté schématiquement en perspective du dessous par la figure 1, comporte des ailes 2 portant des turbopropulseurs 3.

De façon usuelle (voir la figure 2), chaque turbopropulseur 3 comporte une hélice 4 (représentée partiellement sur la figure 2) et une turbine (non représentée sur la figure 2) équipée d'une tuyère 5 pour le rejet à l'extérieur du flux de gaz chauds F engendré par ladite turbine. Comme le montre la figure 2, la tuyère 5 est prolongée vers l'extérieur par un conduit tubulaire 6, incliné vers le bas et traversé par ledit flux chaud F. Le conduit tubulaire 6 débouche à l'extérieur par son extrémité inférieure 7.

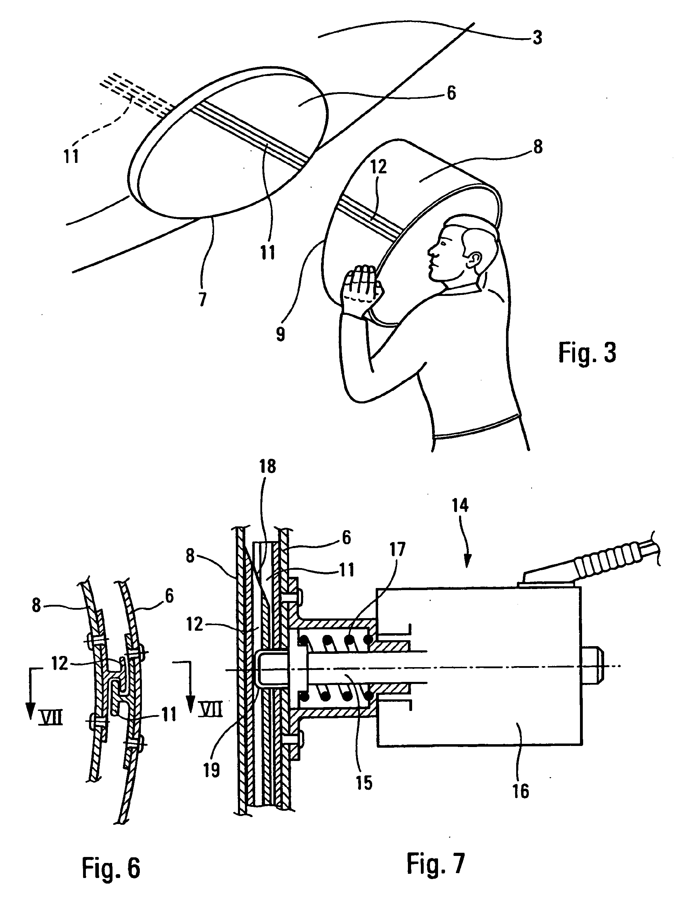

Comme l'illustre schématiquement la figure 2, à l'intérieur du conduit tubulaire 6 est disposé un manchon tubulaire 8 (voir également la figure 3) qui est apte à coulisser dans le conduit tubulaire 6 en étant traversé par ledit flux chaud F.

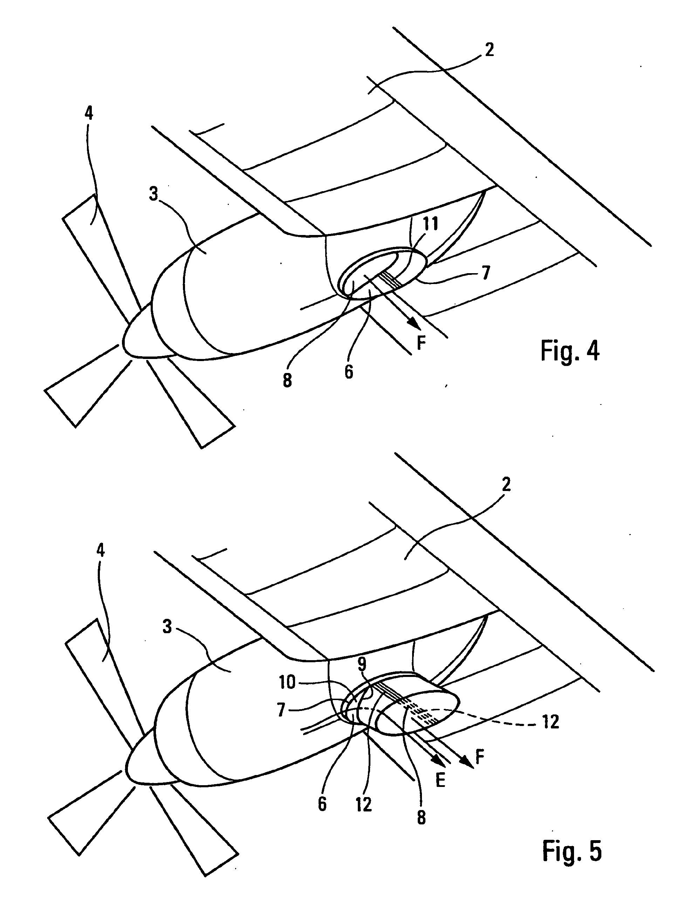

Comme le montre en trait plein la figure 2, le manchon tubulaire 8 peut occuper, dans le conduit tubulaire 6, une position interne pour laquelle il est entièrement logé à l'intérieur de ce dernier (voir également la figure 4).

Le manchon tubulaire 8 peut également occuper, comme cela est illustré en pointillés sur la figure 2 et en perspective sur la figure 5, une position saillante pour laquelle il fait saillie à l'extérieur du conduit 6. Dans cette position saillante, comme cela est illustré par la flèche E sur les figures 2 et 5, le manchon tubulaire 8 prélève, lorsque l'avion est en vol, un flux d'air extérieur frais au voisinage du turbopropulseur 3 et le mélange au flux chaud F, de sorte que, à la sortie du manchon 8, le mélange effectué présente une température inférieure à celle dudit flux chaud F.

Comme on peut le voir sur les figures 2 et 3, le manchon 8 est taillé en sifflet à son extrémité 9 dirigée vers la tuyère 5. Ainsi, en posiiton saillante, il apparaît une ouverture latérale 10, dirigée vers l'avant de l'avion 1, entre l'extrémité inférieure 7 du conduit 6 et l'extrémité en biais 9 du manchon 8. Cette ouverture 10 agit comme une écope pour introduire le flux extérieur frais E à l'intérieur du manchon 8 et l'y mélanger au flux chaud F.

Grâce à des glissières longitudinales coopérantes 11 et 12, respectivement montées dans le conduit 6 et sur le manchon 8, ce dernier est guidé en coulissement à l'intérieur dudit conduit (voir notamment la figure 6).

Le manchon 8, par exemple réalisé en tôle d'acier inoxydable, peut être chargé dans le conduit 6 de la façon illustrée par la figure 3, en faisant coopérer les glissières 12 du manchon 8 avec les glissières 11 du conduit 6 et en poussant ledit manchon 8 dans ledit conduit jusqu'à ce que des moyens de verrouillage 14 verrouillent automatiquement le manchon 8 en position interne (figure 4).

Les moyens de verrouillage 14 comportent un doigt de verrouillage 15 actionné par un électroaimant 16 et monté élastiquement par rapport à celui-ci par un ressort de compression 17 (figure 7).

Eventuellement, l'extrémité avant de la glissière 12 du manchon 8 est taillée en un biseau 18.

Ainsi, quand au cours du chargement du manchon 8 dans le conduit 6, le biseau 18 atteint le doigt de verrouillage 15, il le repousse à l'encontre de l'action du ressort 17, jusqu'à ce que ce dernier fasse pénétrer ledit doigt de verrouillage 15 dans une encoche 19 de ladite glissière 12. Le manchon 8 est alors verrouillé en position interne (figure 4) dans le conduit 6.

Lorsque, en vol, il est utile de réduire la signature infrarouge du turbopropulseur 3, on commande l'électroaimant 16, qui rétracte le doigt de verrouillage 15 en le faisant sortir de l'encoche 19. Le manchon 8 peut alors passer de sa position interne (figure 4) à sa position saillante (figure 5) grâce à l'action conjuguée de la pesanteur et du flux chaud F.

Il est prévu sur le conduit 6 des seconds moyens de verrouillage identiques aux premiers moyens 14 pour verrouiller automatiquement le manchon 8 dans sa position saillante, qui est alors marquée par la coopération d'un doigt de verrouillage (identique au doigt 15) et d'une encoche de la glissière 12 (identique à l'encoche 19). A cet effet, l'extrémité arrière de la glissière 12 peut comporter un biseau semblable au biseau 18.

Si, comme cela est illustré schématiquement sur la figure 1, on désire larguer en vol les manchons 8, on commande en conséquence l'électroaimant des seconds moyens de verrouillage de façon à rétracter le doigt de verrouillage de ceux-ci. Les manchons 8 peuvent alors glisser vers le bas jusqu'à sortir entièrement des conduits 6.

## Revendications

1. Dispositif pour réduire les émissions infrarouge à la sortie d'un turbopropulseur (3) monté sur un aéronef (1), ladite sortie comportant, intérieurement audit turbopropulseur, un conduit tubulaire (6) qui prolonge la tuyère (5) dudit turbopropulseur (3) vers le bas et qui est traversé par le flux des gaz chauds (F) sortant de ladite tuyère (5),
**caractérisé en ce qu'**il comporte un manchon tubulaire (8) qui est apte à glisser dans ledit conduit tubulaire (6) en étant traversé par ledit flux de gaz chauds (F) et qui peut passer :
- d'une position interne, pour laquelle ledit manchon tubulaire (8) est intégralement logé à l'intérieur dudit conduit tubulaire (6),
- à une position saillante, pour laquelle ledit manchon tubulaire (8) fait saillie à l'extérieur dudit conduit tubulaire (6) et est apte à prélever, à la manière d'une écope, un flux d'air frais extérieur (E) au voisinage dudit turbopropulseur (3) et à mélanger ledit flux d'air frais extérieur (E) ainsi prélevé audit flux de gaz chauds (F) provenant de la turbine, afin d'abaisser la température de ce dernier flux avant son rejet à l'extérieur par ledit manchon tubulaire (8).

2. Dispositif selon la revendication 1,
**caractérisé en ce que** ledit manchon tubulaire (8) comporte une ouverture latérale (10) dirigée vers l'avant dudit aéronef (1) et disposée, en position saillante dudit manchon, au voisinage dudit turbopropulseur (3).

3. Dispositif selon la revendication 2,
**caractérisé en ce que** ladite ouverture latérale (10) résulte du fait que l'extrémité (9) dudit manchon tubulaire (8) dirigée vers ladite tuyère (5) est tronquée en biais.

4. Dispositif selon l'une des revendications 1 à 3,
**caractérisé en ce que** ledit manchon tubulaire (8) et ledit conduit tubulaire (6) comportent des glissières coopérantes (11, 12) afin de guider le coulissement dudit manchon (8) dans ledit conduit (6).

5. Dispositif selon l'une quelconque des revendications 1 à 4, **caractérisé en ce que** ledit manchon tubulaire (8) est rapporté de façon amovible dans ledit conduit tubulaire (6).

6. Dispositif selon l'une des revendications 1 à 5,
**caractérisé en ce que** ladite position interne du manchon (8) est marquée par des premiers moyens de verrouillage (14) à verrouillage automatique et à déverrouillage commandable, solidaires dudit conduit tubulaire (6).

7. Dispositif selon l'une des revendications 1 à 6,
**caractérisé en ce que** ladite position saillante du manchon est marquée par des seconds moyens de verrouillage à verrouillage automatique, solidaires dudit conduit tubulaire (6).

8. Dispositif selon la revendication 7,
**caractérisé en ce que** lesdits seconds moyens de verrouillage sont du type à déverrouillage commandable.

9. Turbopropulseur pour aéronef, la sortie de la tuyère dudit turbopropulseur comportant un conduit tubulaire interne qui prolonge ladite tuyère vers le bas,
**caractérisé en ce que** ledit conduit tubulaire interne (6) comporte des glissières (11) aptes à coopérer avec les glissières (12) montées sur le manchon tubulaire (8) du dispositif spécifié sous l'une quelconque des revendications 4 à 8.

10. Turbopropulseur pour aéronef, la sortie de la tuyère dudit turbopropulseur comportant un conduit tubulaire interne qui prolonge ladite tuyère vers le bas,
**caractérisé en ce que** ledit conduit tubulaire interne (6) comporte des moyens de verrouillage aptes à verrouiller, en position à l'intérieur dudit conduit tubulaire (6), le manchon tubulaire (8) du dispositif spécifié sous l'une quelconque des revendications 6 à 8.

## Claims

1. A device for reducing infrared emissions at the outlet of a turboprop (3) mounted to an aircraft (1), said outlet having, within said turboprop, a tubular duct (6) which extends downwardly from a nozzle (5) of said turboprop (3) and through which hot gases (F) flow off said nozzle (5),
**characterised in that** it has a tubular sleeve (8) which is able to slide into said tubular duct (6) while said hot gases (F) flow therethrough and which can switch:
- from an inner position, in which said tubular sleeve (8) is entirely accommodated inside said tubular duct (6),
- to a projecting position, in which said tubular sleeve (8) projects outwardly from said tubular duct (6) and is able to collect, in the same way as a scoop, a flow of outside fresh air (E) in the vicinity of said turboprop (3) and to mix said flow of outside fresh air (E) thus collected with said gases flow (F) coming from the turbine, in order to lower the temperature of the latter flow before it is discharged outside by said tubular sleeve (8).

2. The device according to claim 1,
**characterised in that** said tubular sleeve (8) has a side opening (10) directed to the front of said aircraft (1) and arranged, in a projecting position of said sleeve, in the vicinity of said turboprop (3).

3. The device according to claim 2,
**characterised in that** said side opening (10) results from the fact that the end (9) of said tubular sleeve (8) directed towards said nozzle (5) is truncated slantwise.

4. The device according to any of claims 1 to 3,
**characterised in that** said tubular sleeve (8) and said tubular duct (6) have cooperating slides (11, 12) in order to guide the sliding of said sleeve (8) in said duct (6).

5. The device according to any of claims 1 to 4,
**characterised in that** said tubular sleeve (8) is removably inserted into said tubular duct (6).

6. The device according to any of claims 1 to 5,
**characterised in that** said inner position of the sleeve (8) is labelled by first latching means (14) with automatic latching and controllable unlatching, integral with said tubular duct (6).

7. The device according to any of claims 1 to 6,
**characterised in that** said projecting position of the sleeve is labelled by second latching means with automatic latching, integral with said tubular duct (6).

8. The device according to claim 7,
**characterised in that** said second latching means are of the controllable unlatching type.

9. A turboprop for an aircraft, in which the outlet of the nozzle of said turboprop has an inner tubular duct which extends downwardly from said nozzle,
**characterised in that** said inner tubular duct (6) has slides (11) able to cooperate with the slides (12) mounted to the tubular sleeve (8) of the device as set out according to any of claims 4 to 8.

10. A turboprop for an aircraft, in which the outlet of a nozzle of said turboprop has an inner tubular duct which extends downwardly from said nozzle,
**characterised in that** said inner tubular duct (6) has latching means able to latch, in a position inside said tubular duct (6), the tubular sleeve (8) of the device as set out according to any of claims 6 to 8.

## Patentansprüche

1. Vorrichtung zur Reduzierung der Infrarotemissionen am Ausgang eines Turboprop-Triebwerks (3), das an einem Luftfahrzeug (1) montiert ist, wobei der Ausgang, im Innern des Turboprop-Triebwerks, eine röhrenförmige Leitung (6) aufweist, welche die Düse (5) des Turboprop-Triebwerks (3) nach unten verlängert und die durch den Strom heißer Gase (F), der aus der Düse (5) austritt, durchströmt wird,
**dadurch gekennzeichnet, dass** sie eine röhrenförmige Hülse (8) aufweist, die dafür geeignet ist, in die röhrenförmige Leitung (6) zu gleiten, indem sie durch den Strom heißer Gase (F) durchströmt wird, und die übergehen kann von:
- einer inneren Position, bei der die röhrenförmige Hülse (8) vollständig im Innern der röhrenförmigen Leitung (6) angeordnet ist,
- in eine herausragende Position, bei der die röhrenförmige Hülse (8) aus der röhrenförmigen Leitung (6) herausragt und dafür geeignet ist, wie ein Ansaugschacht, einen Strom frischer Außenluft (E) in der Nähe des Turboprop-Triebwerks (3) zu entnehmen und den somit entnommenen Strom frischer Außenluft (E) mit dem von der Turbine kommenden Strom heißer Gase (F) zu vermischen, um die Temperatur dieses letzten Stroms vor dessen Ausstoß durch die röhrenförmige Hülse (8) abzusenken.

2. Vorrichtung nach Anspruch 1, **dadurch gekennzeichnet, dass** die röhrenförmige Hülse (8) eine seitliche Öffnung (10) aufweist, die zur Vorderseite des Luftfahrzeugs (1) hin gerichtet ist und, in der herausragenden Position der Hülse, in der Nähe des Turboprop-Triebwerks (3) angeordnet ist.

3. Vorrichtung nach Anspruch 2, **dadurch gekennzeichnet, dass** die seitliche Öffnung (10) auf der Tatsache beruht, dass das Ende (9) der röhrenförmigen Hülse (8), das zur Düse (5) hin gerichtet ist, schräg abgestumpft ist.

4. Vorrichtung nach einem der Ansprüche 1 bis 3, **dadurch gekennzeichnet, dass** die röhrenförmige Hülse (8) und die röhrenförmige Leitung (6) kooperierende Gleitflächen (11, 12) aufweisen, um das Gleiten der Hülse (8) in die Leitung (6) zu führen.

5. Vorrichtung nach einem der Ansprüche 1 bis 4, **dadurch gekennzeichnet, dass** die röhrenförmige Hülse (8) auf lösbare Weise in die röhrenförmige Leitung (6) zurückgebracht wird.

6. Vorrichtung nach einem der Ansprüche 1 bis 5, **dadurch gekennzeichnet, dass** die innere Position der Hülse (8) durch erste Verriegelungsmittel (14) mit automatischer Verriegelung und betätigbarer Entriegelung markiert ist, die mit der röhrenförmigen Leitung (6) fest verbunden sind.

7. Vorrichtung nach einem der Ansprüche 1 bis 6, **dadurch gekennzeichnet, dass** die herausragende Position der Hülse durch zweite Verriegelungsmittel mit automatischer Verriegelung markiert ist, die mit der röhrenförmigen Leitung (6) fest verbunden sind.

8. Vorrichtung nach Anspruch 7, **dadurch gekennzeichnet, dass** die zweiten Verriegelungsmittel des Typs mit betätigbarer Verriegelung sind.

9. Turboprop-Triebwerk für ein Luftfahrzeug, wobei der Ausgang der Düse des Turboprop-Triebwerks eine innere röhrenförmige Leitung aufweist, welche die Düse nach unten verlängert, **dadurch gekennzeichnet, dass** die innere röhrenförmige Leitung (6) Gleitflächen (11) aufweist, die für das Zusammenwirken mit den Gleitflächen (12) geeignet sind, die an der röhrenförmigen Hülse (8) der Vorrichtung, die in einem der Ansprüche 4 bis 8 spezifiziert wird, montiert sind.

10. Turboprop-Triebwerk für ein Luftfahrzeug, wobei der Ausgang der Düse des Turboprop-Triebwerks eine innere röhrenförmige Leitung aufweist, welche die Düse nach unten verlängert, **dadurch gekennzeichnet, dass** die innere röhrenförmige Leitung (6) Verriegelungsmittel aufweist, die dafür geeignet sind, die röhrenförmige Hülse (8) der Vorrichtung, die in einem der Ansprüche 6 bis 8 spezifiziert wird, in der Position im Innern der röhrenförmigen Leitung (6), zu verriegeln.
